# EUROPEAN PATENT APPLICATION

(11) **EP 2 975 279 A1**
(43) Date of publication of application: **20.01.2016**
(21) Application number: 14765599.7
(22) Date of filing: 21.02.2014
(51) Int. Cl.: F16C 33/78, F16C 19/38, F16C 33/58

(54) **BEARING DEVICE WITH SEALING DEVICE**

(30) Priority: 15.03.2013 JP 2013053156
(71) Applicant: NTN Corporation, Osaka-shi, Osaka 550-0003 (JP)
(72) Inventor: OOE, Hiroki, Kuwana-shi Mie 511-8678 (JP)
(74) Representative: Mischung, Ralf
(86) International application number: PCT/JP2014/054220
(87) International publication number: WO 2014/141859

(57) **Abstract**

Provided is a bearing device with a sealing device, including an inner ring (12), an outer ring (14), rolling elements (16) interposed between a raceway (12a) of the inner ring (12) and a raceway (14a) of the outer ring (14), a cage (18) for retaining the rolling elements (16) at predetermined intervals in a circumferential direction of the bearing device, anda sealing device (S₂) removably mounted between the inner ring (12) and the outer ring (14). The sealing device (S₂) includes an outer ring-side member (30) mounted on the outer ring (14), an inner ring-side member (40) mounted on the inner ring (12), and an elastic layer (44a) interposed at a fitting portion between the inner ring-side member (40) and the inner ring (12), for reducing a dimensional change of an inner diameter of the inner ring (12).

## Description

### Technical Field

The present invention relates to a bearing device with a sealing device.

### Background Art

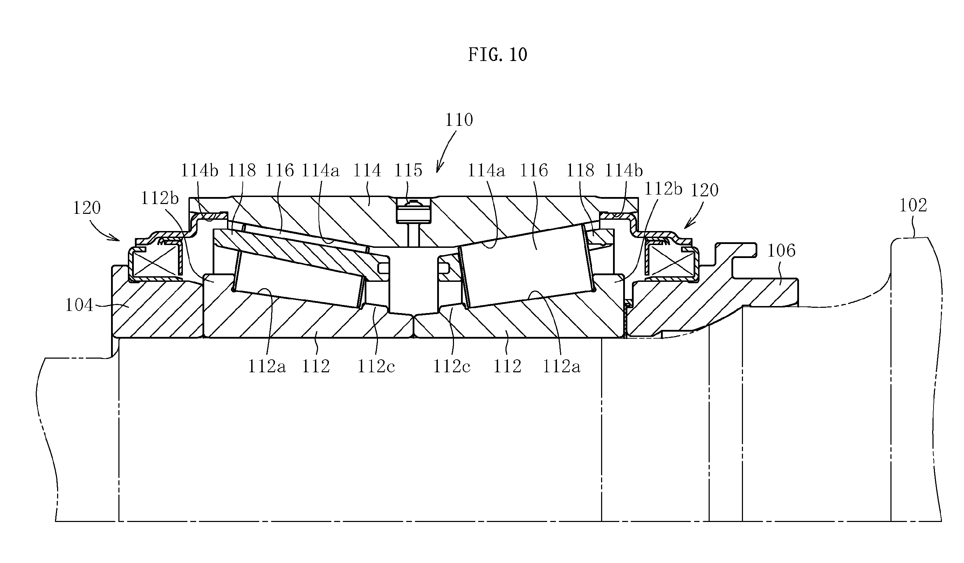

In FIG. 10, a bearing device for an axle of a railway vehicle using a double-row tapered roller bearing is illustrated as an example of a bearing device with a sealing device. This device includes a double-row tapered roller bearing 110, an oil comb 104, and a back cover 106.

The double-row tapered roller bearing 110 includes a pair of inner rings 112 adjacent to each other in an axial direction, a double-row outer ring 114, double-row rolling elements, namely, tapered rollers 116 in this case, and cages 118. The double-row tapered roller bearing 110 further includes sealing devices 120.

Each inner ring 112 has a conical surface-like raceway 112a on an outer circumference of the inner ring 112, and a larger rib 112b and a smaller rib 112c are formed on both sides of the raceway 112a. The double-row outer ring 114 schematically has a cylindrical shape, and has two rows of conical surface-like raceways 114a on an inner circumference of the double-row outer ring 114. Annular recessed portions 114b are formed on inner circumferences of both end portions of the double-row outer ring 114. A grease nipple 115 for replenishing grease into the bearing is mounted at a center part of the double-row outer ring 114. The tapered rollers 116 are interposed between the raceways 112a of the inner rings 112 and the raceways 114a of the outer ring 114. The tapered rollers 116 of each row are retained by the cage 118 at predetermined intervals in a circumferential direction.

The inner ring 112 ispress-fittedtoashaft 102, whereas the outer ring 114 is mounted in a journal box (not shown). The oil comb 104 and the back cover 106 are arranged on both sides of the pair of inner rings 112 in the axial direction. The oil comb 104 is adjacent to the inner ring 112 positioned on a shaft end side of the shaft 102 (left side of FIG. 10), whereas the back cover 106 is adjacent to the inner ring 112 opposite to the shaft end side (right side of FIG. 10). The oil comb 104 and the back cover 106 sandwich the pair of inner rings 112 in the axial direction to position the pair of inner rings 112 on the shaft 102 in the axial direction.

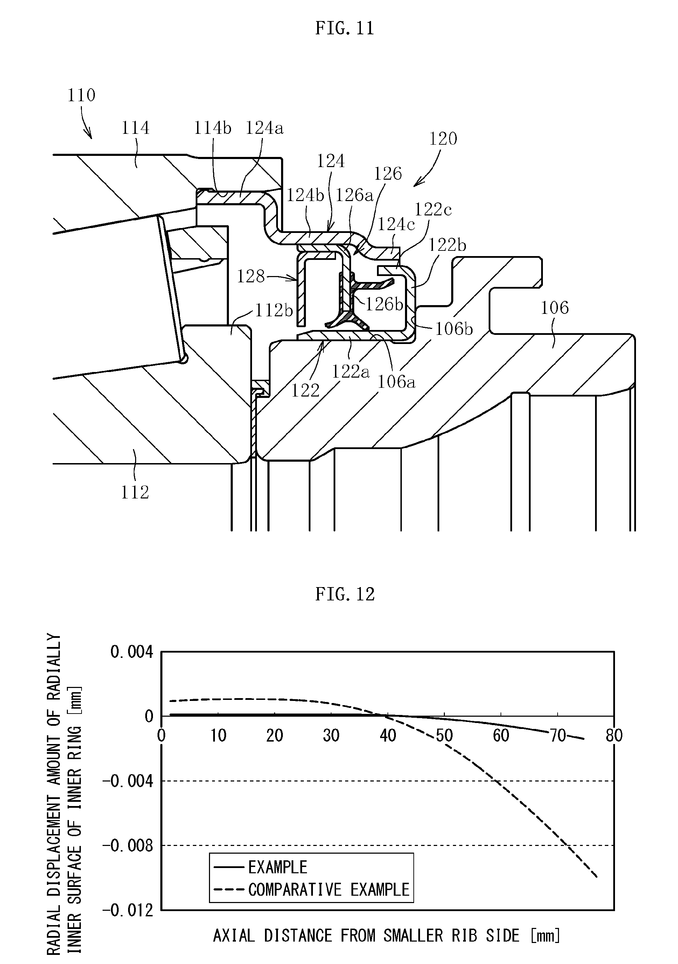

The sealing devices 120 are arranged between the outer ring 114 and the oil comb 104, and between the outer ring 114 and the back cover 106. The sealing devices 120 have the same structure, and hence description is herein made of only the sealing device on the back cover 106 side, whereas description of the sealing device on the oil comb 104 side is omitted herein. As illustrated in an enlarged view of FIG. 11, the sealing device 120 includes a sleeve 122, a seal case 124, a seal main body 126, and a seal ring 128.

The sleeve 122 is mounted on the back cover 106. A small-diameter cylindrical portion 106a having a diameter slightly smaller than an outer circumferential surface of the larger rib 112b of the inner ring 112 is formed on an outer circumference of an end portion of the back cover 106, which is located on the inner ring 112 side. At an end portion of the small-diameter cylindrical portion 106a, which is located opposite to the inner ring side, a stepped surface 106b is formed upright in a radial direction from the small-diameter cylindrical portion 106a. In addition, the sleeve 122 having an outer circumferential surface as a surface to be brought into slidable contact with seal lips is arranged on the small-diameter cylindrical portion 106a of the back cover 106. The sleeve 122 includes an inner cylindrical portion 122a, a flat portion 122b, and an outer cylindrical portion 122c. The inner cylindrical portion 122a is fitted to the small-diameter cylindrical portion 106a of the back cover 106. The flat portion 122b of the sleeve 122 is formed upright in the radial direction from a distal end portion of the inner cylindrical portion 122a when viewed from the bearing 110 side, and is continuous with the outer cylindrical portion 122c on a radially outer side. The flat portion 122b is brought into abutment against the stepped surface 106b of the back cover 106.

The seal case 124 is mounted on the outer ring 114 of the bearing 110, and extends coaxially with the sleeve 122 on the outer circumference thereof. The seal case 124 has a cylindrical shape with three stages, including a large-diameter cylindrical portion 124a, a medium-diameter cylindrical portion 124b, and a small-diameter cylindrical portion 124c. The large-diameter cylindrical portion 124a is fitted to the annular recessed portion 114b of the outer ring 114. The small-diameter cylindrical portion 124c is positioned on an outer circumference of the outer cylindrical portion 122c of the sleeve 122 to form a labyrinth seal therebetween. The medium-diameter cylindrical portion 124b is a portion for retaining the seal main body 126.

The seal main body 126 includes a core metal 126a and an elastic seal 126b. The core metal 126a is formed of a metal plate into an L-shape in cross section by press working. The core metal 126a includes a cylindrical portion and a flange portion, and the cylindrical portion is fitted to the medium-diameter cylindrical portion 124b of the seal case 124. A base portion of the elastic seal 126b is integrally fixed to an inner circumferential end edge of the flange portion of the core metal 126a. Three seal lips each extend from the base portion of the elastic seal 126b. That is, the three seal lips are two first lips each extending obliquely toward a radially inner side, and a second lip extending in the axial direction. Of the first lips, the lip on a left side of FIG. 11 is oriented toward the bearing 110, whereas the lip on a right side of FIG. 11 is oriented opposite to the lip on the left side. Both the lips are lightly brought into contact with the outer circumferential surface of the inner cylindrical portion 122a of the sleeve 122 at distal ends of the lips. The second lip extends in a direction away from the bearing 110, and has a distal end increased in diameter to be located in proximity to an inner circumferential surface of the outer cylindrical portion 122c of the sleeve 122.

The seal ring 128 is arranged closer to the bearing 110 than the seal main body 126. The seal ring 128 includes a cylindrical portion and a flat portion, and the cylindrical portion is fitted to an inner circumference of the cylindrical portion of the core metal. The disc portion of the seal ring 128 has its distal end (radially inner end) located in proximity to the outer circumferential surface of the inner cylindrical portion 122a of the sleeve 122 to form a labyrinth seal therebetween.

The labyrinth seal formed between the seal ring 128 and the inner cylindrical portion 122a of the sleeve 122 and the two first lips lightly brought into contact with the outer circumferential surface of the inner cylindrical portion 122a of the sleeve 122 prevent leakage of the lubricant such as the grease inside the bearing 110. Further, the labyrinth seal formed between the small-diameter cylindrical portion 124c of the seal case 124 and the outer cylindrical portion 122c of the sleeve 122 and the second lip prevent entry of water or foreign matter into the bearing.

### Citation List

Patent Literature 1: JP 09-68232 A

### Summary of Invention

### Technical Problem

To downsize the bearing unit including the oil comb, the bearing, and the back cover in the axial direction without influencing a rated load of the bearing, there is given a method of forming a sliding portion of the seal lip on the outer circumferential surface of the larger rib of the inner ring instead of the oil comb or the back cover. However, wear of the sliding portion of the seal lip may be advanced over time to degrade its sealability. The oil comb and the back cover are replaceable with new ones, but the replacement of the inner ring is not economical. Therefore, it is conceived that a separate sleeve is mounted on the outer circumferential surface of the larger rib of the inner ring and this sleeve is replaced (Patent Literature 1).

However, the inner ring and the shaft are generally designed to have a dimensional relationship for achieving interference fit, and hence, when the sleeve is fitted to the outer circumferential surface of the larger rib of the inner ring, the dimensions of the inner ring are changed due to influence of the fitting, thereby causing a risk of difficulty in press-fitting the inner ring to the shaft or a risk of scuffing the shaft. Further, it is conceived that, after the inner ring is mounted to the shaft, the fitting between the inner ring and the shaft may become tighter at only a part corresponding to the sleeve to locally increase the contact pressure, resulting in wear of the shaft.

It is therefore an object of the present invention to eliminate the problems described above.

### Solution to Problem

The present invention has solved the problems by interposing an elastic layer at a fittingportion. That is, according to one embodiment of the present invention, there is provided a bearing device with a sealing device, comprising:
an inner ring;
an outer ring;
rolling elements interposed between a raceway of the inner ring and a raceway of the outer ring;
a cage for retaining the rolling elements at predetermined intervals in a circumferential direction of the bearing device; and
a sealing device mounted between the inner ring and the outer ring,
the sealing device comprising:
   an inner ring-side member mounted on the inner ring;
   an outer ring-side member mounted on the outer ring;
   a seal main body interposed between the inner ring-side member and the outer ring-side member; and
   an elastic layer formed on a surface of the inner ring-side member, which is fitted to the inner ring, for reducing a dimensional change of an inner diameter of the inner ring,
   the seal main body having a base portion fixed to the inner ring-side member or the outer ring-side member.

The elastic layer is configured to reduce a dimensional change (reduction) of the inner diameter of the inner ring, which is caused by fitting the inner ring-side member to the inner ring, to the extent possible, preferably to 10 µm or less. Therefore, it is preferred that the thickness of the elastic layer be set to range from 1.0 mm to 2.0 mm and the interference be set to range from 100 µm to 500 µm in terms of diameter. Inthiscase, the thickness of the inner ring 12 ranges, for example, from 20 mm to 30 mm at a part to which the inner ring-side member 40 is fitted.

The material forming the elastic layer only needs to be a material having a smaller Young's modulus than metal materials forming the inner ring and the inner ring-side member of the sealing device. A rubber may be given as a typical example. As a rough indication, the Young's modulus is about 9. 8 MPa and the Poisson's ratio is about 0.3. As is widely known, the Young's modulus (or modulus of longitudinal elasticity) refers to a ratio between a stress within a range equal to or less than a proportional limit of tensile testing and a strain in a direction of the stress. The ratio between a shearing stress and a shearing strain within the range equal to or less than the proportional limit is referred to as modulus of rigidity. The same materials have a constant ratio between a transverse strain and a vertical strain within a range of an elastic limit. This ratio is referred to as Poisson's ratio.

As the seal main body, any type of seal main body may be selected and employed as appropriate from among the type described above in reference to FIG. 11 and various other existing types. Various oil seals are standardized (JIS B2042) and available on the market. Alternatively, there may be employed such a type that the seal lip is arranged integrally with the elastic layer on the inner ring-side member rotatable together with the inner ring. In this case, during the rotation of the bearing, the seal lip serves to exert its original sealing action through slidable contact with the outer ring-side member, and also to throw water or the like off the bearing due to a centrifugal action. It goes without saying that the elastic material in this case needs to have properties required as the sealing device for the bearing (such as oil resistance and heat resistance).

### Advantageous Effects of Invention

According to the one embodiment of the present invention, the elastic layer is interposed between the larger rib of the inner ring and the inner ring-side member of the sealing device, which is fitted to the larger rib. Therefore, the elastic layer having a smaller Young's modulus than the metal materials forming the inner ring and the inner ring-side member is deformed to mitigate the influence of the interference at the fitting portion between the inner ring and the inner ring-side member, thereby being capable of suppressing the deformation of the radially inner part of the inner ring. Thus, the mountability of the bearing device with a sealing device to the shaft is enhanced and the locally high contact pressure is not generated in the fitting surface of the shaft. As a result, the wear of the shaft can be suppressed.

### Brief Description of Drawings

FIG. 1 is a vertical sectional view of an example of the present invention.
FIG. 2 is an enlarged view of an inner ring of FIG. 1.
FIG. 3 is an enlarged view similar to FIG. 2, for illustrating a modified example of the inner ring.
FIG. 4 is an enlarged view similar to FIG. 2, for illustrating a modified example of the inner ring.
FIG. 5 is an enlarged view similar to FIG. 2, for illustrating a modified example of the inner ring.
FIG. 6 is a partially enlarged view of FIG. 1, for illustrating a modified example.
FIG. 7 is a vertical sectional view of another example of the present invention.
FIG. 8 is an enlarged view of a sealing device of FIG. 7.
FIG. 9 is a partially enlarged view of FIG. 8.
FIG. 10 is a vertical sectional view of a bearing device for an axle of a railway vehicle, for illustrating the related art.
FIG. 11 is a partially enlarged view of FIG. 10.
FIG. 12 is a graph of deformation amounts of a radially inner part of the inner ring.

### Description of Embodiments

Now, embodiments of the present invention are described in detail with reference to the drawings. The description is herein made by taking as an example a case where the present invention is applied to a bearing for an axle of a railway vehicle.

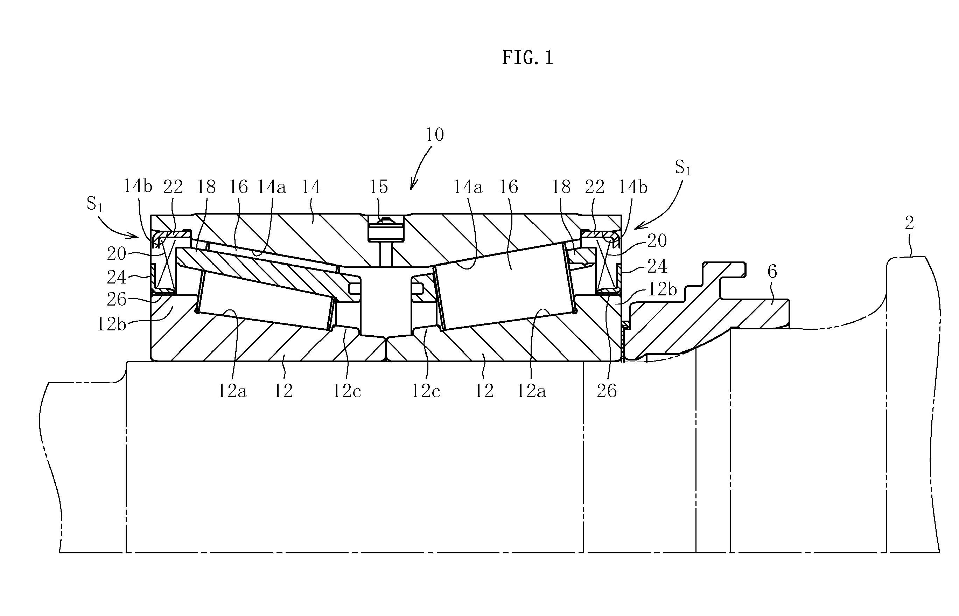

The bearing for an axle of a railway vehicle as illustrated in FIG. 1 is an example using a double-row tapered roller bearing. A double-row tapered roller bearing 10 comprises, as main components thereof, a pair of inner rings 12, a double-row outer ring 14, tapered rollers 16 serving as rolling elements, and cages 18. The inner rings 12 are fitted to a shaft 2, and are positioned in an axial direction by an oil comb (see FIG. 10) and a back cover 6 similarly fitted to the shaft 2. Each inner ring 12 has a raceway 12a on an outer circumference of the inner ring 12, and a larger rib 12b and a smaller rib 12c are formed on both sides of the raceway 12a. The outer ring 14 is a so-called double-row outer ring having two rows of raceways 14a formed on an inner circumference of the outer ring 14, and is fixed to an axle box (not shown). A grease nipple 15 for replenishing grease serving as a lubricant is mounted at a center part of the outer ring 14. Two rows of the tapered rollers 16 are interposed between the raceways 12a of the inner rings 12 and the raceways 14a of the outer ring 14. The tapered rollers 16 of each row are retained by the cage 18 at predetermined intervals in a circumferential direction.

Sealing devices S₁ are provided so as to prevent leakage of the grease filled into the bearing, and to also prevent entry of water or other foreign matter into the bearing from the outside. As the sealing devices S₁, existing sealing devices may be selected and employed as appropriate. Simplified illustration of the sealing devices S₁ in FIG. 1 means that existing sealing devices are employed as the sealing devices S₁, and detailed description thereof is therefore omitted herein. Each sealing device S₁ comprises a seal main body 20, a seal case 22, and a sleeve 24. The seal case 22 is mounted by fitting to an annular recessed portion 14b formed at an end portion of the outer ring 14. The sleeve 24 is made of a metal to have an L-shape in cross section, and a radially inner cylindrical portion of the sleeve 24 is fitted to an outer circumferential surface of the larger rib 12b of the inner ring 12. Thus, the seal case 22 serving as an outer ring-side member is arranged on a stationary side, whereas the sleeve 24 serving as an inner ring-side member is arranged on a rotary side.

When the sleeve 24 is merely fitted to the outer circumferential surface of the larger rib 12b of the inner ring 12, the following problem may arise. That is, when the sleeve 24 is fitted to the larger rib 12b of the inner ring 12 by press-fitting, the inner diameter of the inner ring 12 is reduced due to influence of the press-fitting (see FIG. 12). Specifically, depending on the interference, the inner diameter is reduced by about 20 µm. Therefore, it may be difficult to press-fit the inner ring 12 to the shaft 2. To enhance the mountability of the inner ring 12 to the shaft 2, it is conceived that a guide sleeve having a tapered surface is used separately. Even when the inner ring 12 is mounted to the shaft 2 in that manner, the fitting between the inner ring 12 and the shaft 2 may become locally tighter to increase the contact pressure, resulting in wear of the shaft 2.

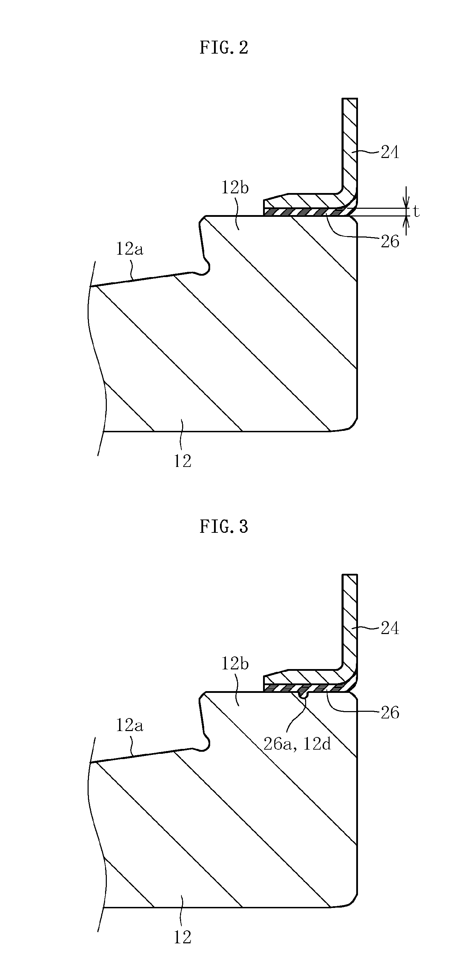

In view of the above, to mitigate the influence of the interference, an elastic layer 26 is interposed between an inner circumferential surface of the cylindrical portion of the sleeve 24 and the outer circumferential surface of the larger rib 12b of the inner ring 12 as illustrated in FIG. 2. With the elastic layer 26 thus interposed, the change of the inner diameter of the inner ring 12 (reduction in diameter) can be reduced while directly fitting the sleeve 24 made of a metal.

Results of an experiment conducted to verify the fact described above are shown in FIG. 12. In FIG. 12, the vertical axis represents a radial displacement amount (mm) of a radially inner part of the inner ring, and the horizontal axis represents an axial distance (mm) from the smaller rib side. The amount of change of the inner diameter of the inner ring 12 is plotted in each of a case where the elastic layer 26 was interposed between the sleeve 24 and the outer circumferential surface of the larger rib 12b of the inner ring 12 (example) and a case where the sleeve 24 made of a metal was directly fitted to the outer circumferential surface of the larger rib 12b of the inner ring 12 (comparative example). As shown in FIG. 12, in the comparative example, the inner diameter of the inner ring 12 is abruptly reduced at a point where the axial distance from the smaller rib side exceeds about 40 mm. In the example of the present invention, on the other hand, the change of the inner diameter of the inner ring is not substantially observed.

Based on the above-mentioned results of the experiment, a thickness t of the elastic layer 26 is set to range from 1.0 mm to 2.0 mm and the interference is set to range from 100 µm to 500 µm in terms of diameter because the dimensional change of the inner diameter of the inner ring 12 was reduced effectively. When the thickness t is set less than 1.0 mm, the amount of the dimensional change of the inner diameter of the inner ring 12 is 10 µm or more, thereby causing a risk of difficulty in press-fitting the inner ring 12 to the shaft 2 or a risk of scuffing the shaft 2 when the inner ring 12 is press-fitted forcibly. When the thickness t is set more than 2.0 mm, on the other hand, the deformation amount of the elastic layer 26 is increased, thereby causing such a situation that the position of the sleeve 24 integrated with the elastic layer 26 is displaced from the intended position or the sleeve 24 is tilted. As a result, it is conceived that the sealability is influenced adversely, and hence the above-mentioned setting of the thickness is not preferred for the sealing mechanism of the bearing. Further, the interference with the outer circumferential surface of the larger rib 12b of the inner ring 12 is set such that a moderate squeezing rate is imparted to the elastic layer 26, and hence the fitting force is set to range from about 1 kN to about 5 kN.

Further, the inner ring 12 as a mating member on which the sleeve 24 is mounted has a thickness of from about 20 mm to about 30 mm at a part fitted to the sleeve 24, and a material for the inner ring 12 is assumed to be a metal having a Young's modulus E of 208 GPa and a Poisson's ratio ε of about 0.3. When this design is employed, the amount of the dimensional change of the inner diameter of the inner ring 12 can be reduced to 10 µm or less at a position where the inner ring 12 is fitted to the sleeve 24. As a result, even in the bearing in which the sleeve 24 is to be mounted to the inner ring 12, the inner ring 12 can be press-fitted to the shaft, and the wear that may be caused by local increase of the fitting contact pressure between the inner ring 12 and the shaft can be suppressed.

As a material forming the elastic layer 26, a rubber or an elastomer may be employed. A material having a Young' s modulus E of about 9.8 MPa and a Poisson's ratio ε of about 0.3 is conceived. For example, a nitrile rubber, a hydrogenated nitrile rubber, an acrylic rubber, and a fluororubber are given.

When the elastic layer 26 is interposed, the axial restraint force is weaker than in the case where the sleeve 24 made of a metal is directly fitted, and hence it is desired to take some measures. As the measures to increase the axial restraint force, the following example is conceived. FIG. 3 is an illustration of an example in which a groove 12d extending in the circumferential direction is formed in the outer circumferential surface of the larger rib 12b of the inner ring 12 and a projection 26a extending in the circumferential direction is formed on an inner circumferential surface of the elastic layer 26 so that the projection 26a is engaged with the groove 12d. As the projection 26a, there may be employed not only a projection extending over the entire circumference, but also projections intermittently arranged in the circumferential direction.

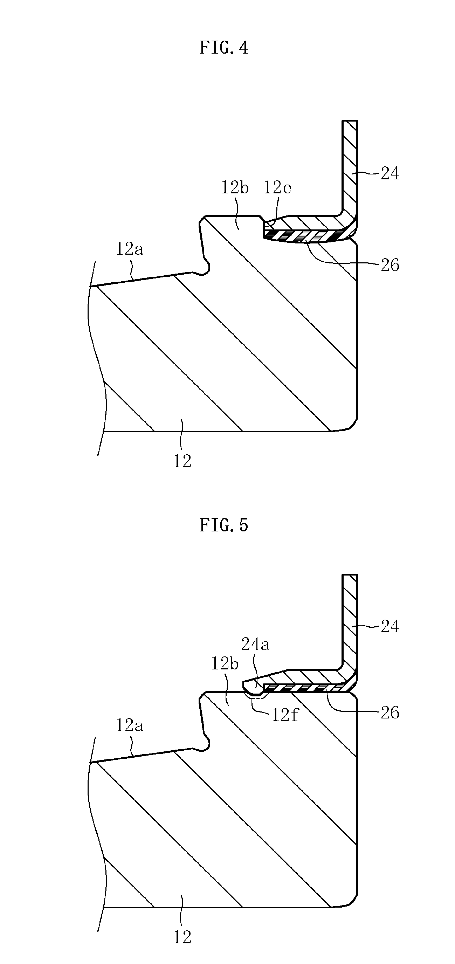

FIG. 4 is an illustration of an example in which the inner circumferential surface of the elastic layer 26 is formed into a convex arc shape in vertical cross section and the outer circumferential surface of the larger rib 12b of the inner ring 12 is formed into a concave arc shape in vertical cross section so that the axial movement of the sleeve 24 is restrained through engagement of both the surfaces. The arc may have an arbitrary curvature radius as long as the purpose of increasing the axial restraint force for the elastic layer 26 can be achieved. Note that, in FIG. 4, the outer circumferential surface of the larger rib 12b of the inner ring 12 has a step 12e so that the end surface of the cylindrical portion of the sleeve 24 is brought into abutment against the step 12e, thereby securely preventing movement of the sleeve 24 toward the inner side of the bearing with respect to the elastic layer 26.

FIG. 5 is an illustration of an example in which a reduced-diameter portion 24a is formed on the inner circumference of the distal end of the cylindrical portion of the sleeve 24 so that the reduced-diameter portion 24a is engaged with a groove 12f formed on the outer circumferential surface of the larger rib 12b of the inner ring 12 to extend in the circumferential direction. The reduced-diameter portion 24a may have a shape of an inward flange obtained by bending the distal end of the cylindrical portion of the sleeve 24 radially inward. Alternatively, the shape as illustrated in FIG. 5 may be obtained by plastic working such as caulking. Further, as the reduced-diameter portion 24a, there may be employed not only a reduced-diameter portion continuously extending in the circumferential direction, but also a reduced-diameter portion shaped to have a claw arranged at one position in the circumferential direction or claws arranged intermittently in the circumferential direction.

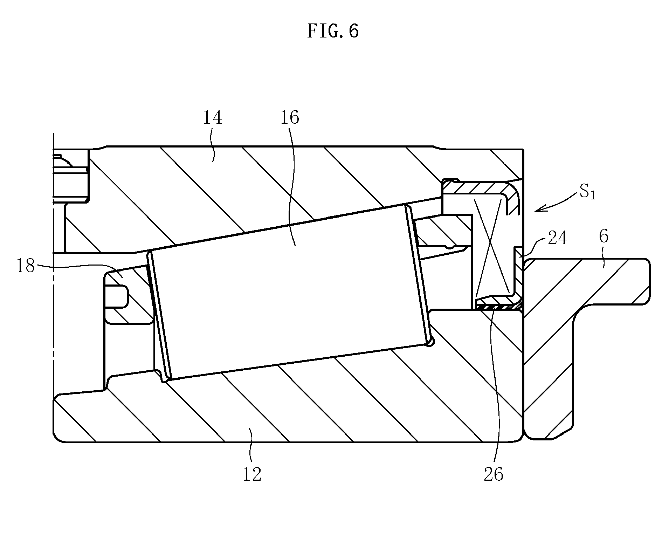

FIG. 6 is an illustration of an example in which the back cover 6 is brought into abutment against the cylindrical portion of the sleeve 24 so that the sleeve 24 is restrained in the axial direction, namely, retained widthwise. In this case, the structure of FIG. 6 may be implemented in combination with the structure as described in reference to FIG. 4, in which the larger rib 12b of the inner ring 12 has the step 12e. As a result, the sleeve 24 is restrained in the axial direction more securely. Further, the structure of FIG. 6 may be implemented in the bearing device as illustrated in FIG. 10, in which the inner ring 112 on the shaft end side of the shaft 102 and the adjacent oil comb 104 are brought into abutment against each other and the inner ring 112 opposite to the shaft end side and the adjacent back cover 106 are brought into abutment against each other to sandwich the pair of inner rings 112 from both sides in the axial direction. As a result, the sleeve 24 is restrained in the axial direction more securely.

As a method of increasing a circumferential restraint force for the sleeve 24, an axial groove extending in the axial direction may be formed in the outer circumferential surface of the larger rib 12b of the inner ring 12 and an axial projection extending in the axial direction may be formed on the inner circumferential surface of the elastic layer 26 so that the axial groove and the axial projection are engaged with each other. The axial groove only needs to be formed at least at one position in the circumferential direction, but in view of rotational balance, it is preferred that two or more, namely, a plurality of axial grooves be arranged equiangularly.

In addition, the outer circumferential surface of the larger rib 12b of the inner ring 12 may be knurled, or metal portions of the inner ring 12 and the sleeve 24 may be welded to each other. In those cases, restraining of the sleeve 24 in the axial direction and the circumferential direction is achieved. For example, spot welding may be employed so that the cylindrical portion of the sleeve 24 and the inner ring 12 can be welded to each other even when the elastic layer 26 is interposed therebetween.

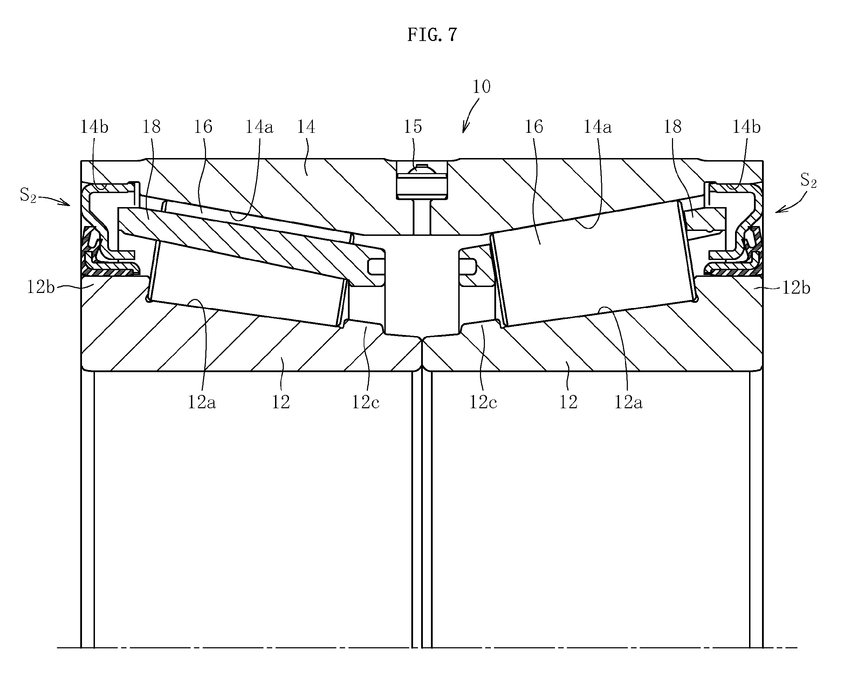

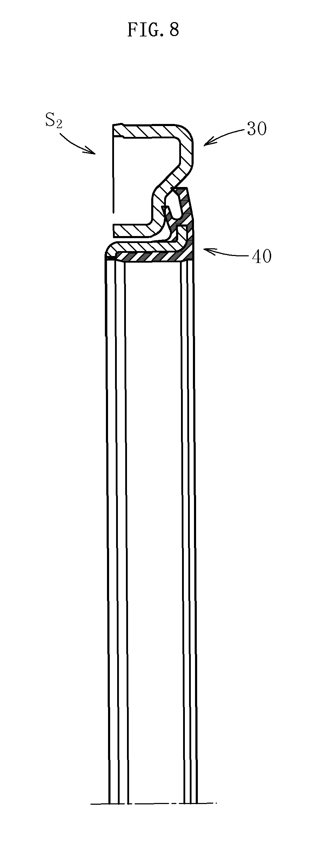

Next, another example of the present invention is illustrated in FIG. 7 to FIG. 9. A double-row tapered roller bearing 10 illustrated in FIG. 7 has substantially the same structure as that illustrated in FIG. 1 except for a part corresponding to sealing devices S₂, and hence substantially the same elements as those of FIG. 1 are represented by the same reference symbols to omit redundant description thereof. Referring to FIG. 7 and FIG. 8, each sealing device S₂ comprises an outer ring-side member 30 and an inner ring-side member 40. The outer ring-side member 30 is mounted on the outer ring 14, whereas the inner ring-side member 40 is mounted on the inner ring 12. Thus, the outer ring-side member 30 is a stationary member, whereas the inner ring-side member 40 is a rotary member.

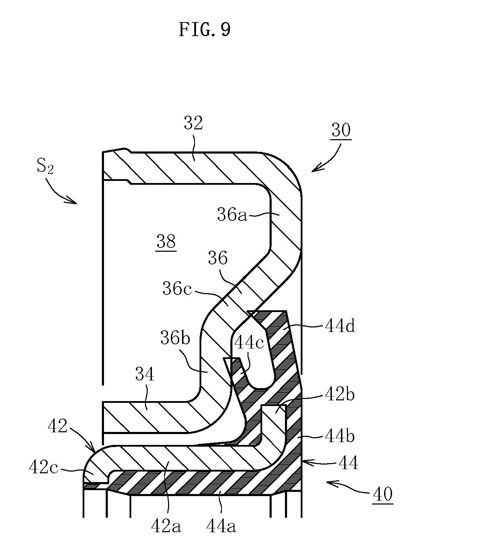

As illustrated in FIG. 9, the outer ring-side member 30 is an annular member formed of a metal plate by press working. The outer ring-side member 30 comprises a large-diameter cylindrical portion 32, a small-diameter cylindrical portion 34, and a connection portion 36. The large-diameter cylindrical portion 32 is a portion press-fitted to the annular recessed portion 14b formed at the end portion of the outer ring 14. A small gap is secured between the small-diameter cylindrical portion 34 and a sleeve 42 of the inner ring-side member 40 to form a labyrinth seal therebetween. The connection portion 36 comprises a radial portion 36a closer to the large-diameter cylindrical portion 32, which is continuous with an end portion of the large-diameter cylindrical portion 32 on the outer side of the bearing, a radial portion 36b closer to the small-diameter cylindrical portion 34, which is continuous with an end portion of the small-diameter cylindrical portion 34 on the outer side of the bearing, and a conical portion 36c connecting the radial portions 36a and 36b to each other. In the illustrated example, as illustrated in FIG. 7, the radial portion 36a closer to the large-diameter cylindrical portion 32 is flush with the end portions of the inner ring 12 and the outer ring 14, and the conical portion 36c extends toward the inner side of the bearing as approaching from the radially outer side to the radially inner side. The end portion of the cage 18 enters an annular space of the outer ring-side member 30, which is represented by reference symbol 38.

The inner ring-side member 40 comprises the sleeve 42 made of a metal, and an elastic body 44. The sleeve 42 comprises a cylindrical portion 42a, an outward flange 42b bent radially outward from one end of the cylindrical portion 42a, and an inward flange 42c bent radially inward from another end portion of the cylindrical portion 42a. The inner diameter of the inward flange 42c is larger than the diameter of the outer circumferential surface of the larger rib 12b of the inner ring 12. It is therefore understood that the inner diameter of the cylindrical portion 42a is larger than the diameter of the outer circumferential surface of the larger rib 12b of the inner ring 12.

As illustrated in FIG. 8 and FIG. 9, the elastic body 44 comprises a cylindrical portion 44a positioned on a radially inner side of the cylindrical portion 42a of the sleeve 42, a base portion 44b positioned on an outer circumference of the outward flange 42b, and seal lips 44c and 44d each extending radially outward from the outward flange 42b. All of the cylindrical portion 44a, the base portion 44b, and the seal lips 44c and 44d are made of the same elastic material. The cylindrical portion 44a corresponds to the elastic layer 26 in the example illustrated in FIG. 1 to FIG. 6. The seal lips 44c and 44d serve as a seal main body interposed between the outer ring-side member 30 and the inner ring-side member 40. Considering the workability at the time of fitting the inner ring-side member 40 to the outer circumferential surface of the larger rib 12b of the inner ring 12 by press-fitting, as illustrated in FIG. 9, the inner diameter of the cylindrical portion 44a is increased as approaching to both ends thereof.

The cylindrical portion 44a corresponding to the elastic layer 26 is configured to reduce a dimensional change (reduction) of the inner diameter of the inner ring 12, which is caused by fitting the inner ring-side member 40 to the inner ring 12, to the extent possible, preferably to 10 µm or less. Therefore, it is preferred that the thickness of the cylindrical portion 44a be set to range from 1.0 mm to 2.0 mm and the interference be set to range from 100 µm to 500 µm in terms of diameter. In this case, the thickness of the inner ring 12 ranges from 20 mm to 30 mm at a part to which the inner ring-side member 40 is fitted.

As described in reference to the elastic layer 26 in the example of FIG. 1, the elastic material only needs to be a material having a smaller Young's modulus than steel. Specifically, a rubber may be given as a typical example. The inner ring 12 and the sleeve 42 are generally made of a steel material, and hence the elastic body 44 (in particular, the cylindrical portion 44a) made of a material having a smaller Young's modulus than the steel material is interposed between the inner ring 12 and the sleeve 42. As a result, the influence of the fitting between the inner ring 12 and the sleeve 42 is absorbed through deformation of the elastic body 44, thereby suppressing the reduction in inner diameter of the inner ring 12 or the deformation of the inner ring 12.

Further, in this example, the material forming the elastic body 44 is also the material forming each of the seal lips 44c and 44d, and hence it is desired that the material have properties of a seal material. As the oil seal material, synthetic rubbers such as a nitrile rubber, a hydrogenated nitrile rubber, an acrylic rubber, and a fluororubber are generally known, but a silicone rubber or other elastomers may be used as long as those materials have the properties of the seal material.

The cylindrical portion 44a and the base portion 44b of the elastic body 44 are firmly fixed to the sleeve 42. For example, when a rubber is employed as the material for the elastic body 44, the elastic body 44 and the sleeve 42 may be integrated with each other by utilizing vulcanization bonding. Further, when a thermoplastic elastomer that may be used in injection molding, the elastic body 44 and the sleeve 42 may be integrated with each other by utilizing insert molding.

As the seal lips of the elastic body 44, the illustrated example employs a double-lip structure comprising the inner lip 44c and the outer lip 44d spaced away from each other in the axial direction. An annular groove opened radially outward is formed between the inner lip 44c and the outer lip 44d. As indicated by the solid lines in FIG. 8 and FIG. 9, both of the inner lip 44c and the outer lip 44d in a natural state are inclined toward the inner side of the bearing. In addition, both of the distal ends of the lips 44c and 44d are positioned on the inner side of the bearing with respect to the radial portion 36a closer to the large-diameter cylindrical portion 32 of the outer ring-side member 30. Under a state in which the sealing device S₂ is mounted to the bearing, the inner lip 44c and the outer lip 44d are brought into elastic contact with an outer surface of the connection portion 36 of the outer ring-side member 30. Specifically, the inner lip 44c is brought into contact with the radial portion 36a of the connection portion 36, which is closer to the small-diameter cylindrical portion 32, whereas the outer lip 44d is brought into contact with the conical portion 36c of the connection portion 36.

### Actions of the sealing device S₂ are as follows.

The labyrinth seal formed between the small-diameter cylindrical portion 34 of the outer ring-side member 30 and the sleeve 42 of the inner ring-side member 40 prevents outflow of the grease filled into the bearing. The inner lip 44c mainly prevents the grease filled into the bearing from leaking to the outside. The inner lip 44c also serves to block water or the like having entered through the outer lip 44d. The outer 44d mainly serves to prevent entry of water or other foreign matter from the outside.

The inner lip 44c and the outer lip 44d belong to the rotary member, and hence, during rotation of the bearing, the inner lip 44c and the outer lip 44d also function to throw water or the like off the bearing due to a centrifugal action. The annular space formed between the inner lip 44c and the outer lip 44d is opened radially outward, and hence, even when water or foreign matter enters the annular space, the water or foreign matter is discharged out of the bearing toward the radially outer side due to the centrifugal action during the rotation of the bearing, and is discharged from a lower part of the bearing, namely, from a 6 o'clock position due to gravity drop during a quiescent state.

The structures described in reference to FIG. 3 to FIG. 6 are also applicable, solely or in combination as appropriate, to the example illustrated in FIG. 7 to FIG. 9. Thus, similar effects can be obtained.

The embodiments of the present invention are described above, but the present invention is not limited to the embodiments described above, and various modifications may be made thereto without departing from the scope of claims. For example, the case of using the double-row tapered roller bearing is herein taken as an example, but the present invention is also applicable to a case of using a double-row cylindrical roller bearing. In this case, the larger rib is read as a rib. Further, the present invention is also applicable to a single-row bearing as well as the double-row bearing. As a matter of course, the use of the bearing is not limited to the use for a railway vehicle.

### Reference Signs List

- 2: shaft
- 4: oil comb
- 6: back cover
- 10: double-row tapered roller bearing
- 12: inner ring
- 12a: raceway
- 12b: larger rib
- 12c: smaller rib
- 12d: circumferential groove
- 12e: step
- 12f: circumferential groove
- 14: outer ring
- 14a: raceway
- 14b: annular recessed portion
- 15: grease nipple
- 16: tapered roller
- 18: cage
- S₁: sealing device
- 20: seal main body
- 22: case (outer ring-side member)
- 24: sleeve (inner ring-side member)
- 24a: reduced-diameter portion
- 26: elastic layer
- 26a: circumferential projection
- S₂: sealing device
- 30: outer ring-side member
- 32: large-diameter cylindrical portion
- 34: small-diameter cylindrical portion
- 36: connection portion
- 38: space
- 40: inner ring-side member
- 42: sleeve
- 42a: cylindrical portion
- 42b: outward flange
- 42c: inward flange
- 44: elastic body
- 44a: cylindrical portion (elastic layer)
- 44b: base portion
- 44c: inner lip (seal main body)
- 46d: outer lip (seal main body)

## Claims

1. A bearing device with a sealing device, comprising:
an inner ring;
an outer ring;
rolling elements interposed between a raceway of the inner ring and a raceway of the outer ring;
a cage for retaining the rolling elements at predetermined intervals in a circumferential direction of the bearing device; and
a sealing device mounted between the inner ring and the outer ring,
the sealing device comprising:
an inner ring-side member mounted on the inner ring;
an outer ring-side member mounted on the outer ring;
a seal main body interposed between the inner ring-side member and the outer ring-side member; and
an elastic layer formed on a surface of the inner ring-side member, which is fitted to the inner ring, for reducing a dimensional change of an inner diameter of the inner ring,
the seal main body having a base portion fixed to the inner ring-side member or the outer ring-side member.

2. The bearing device with a sealing device according to claim 1,
wherein the base portion of the seal main body is fixed to the outer ring-side member, and
wherein a distal end of the seal main body is brought into elastic contact with a surface of the inner ring-side member.

3. The bearing device with a sealing device according to claim 1,
wherein the base portion of the seal main body is fixed to the inner ring-side member, and
wherein a distal end of the seal main body is brought into elastic contact with a surface of the outer ring-side member.

4. The bearing device with a sealing device according to claim 3,
wherein the outer ring-side member comprises:
a large-diameter cylindrical portion fitted to an inner circumferential surface of an end portion of the outer ring;
a small-diameter cylindrical portion parallel to the large-diameter cylindrical portion; and
a connection portion connecting an outer end portion of the large-diameter cylindrical portion and an outer end portion of the small-diameter cylindrical portion to each other, and
wherein the inner ring-side member comprises:
a sleeve having a cylindrical shape with an inner diameter larger than a diameter of an outer circumferential surface of a rib of the inner ring;
a flange formed upright radially outward from an outer end portion of the sleeve; and
an elastic layer extending from an inner circumferential surface of the sleeve along a surface of the flange and protruding from the flange in a radial direction of the bearing device to form the seal lip.

5. The bearing device with a sealing device according to claim 4,
wherein the seal lip comprises an inner lip and an outer lip spaced away from each other in an axial direction of the bearing device, and
wherein the seal lip has an annular groove formed between the inner lip and the outer lip to be opened radially outward.

6. The bearing device with a sealing device according to any one of claims 1 to 5,
wherein the rib of the inner ring has a circumferential groove formed in the outer circumferential surface of the rib,
wherein the elastic layer positioned on a radially inner side of the inner ring-side member has a circumferential projection formed on an inner circumferential surface of the elastic layer, and
wherein the circumferential projection is engaged with the circumferential groove.

7. The bearing device with a sealing device according to any one of claims 1 to 5,
wherein an inner circumferential surface of the inner ring-side member has a convex arc shape in vertical cross section, and
wherein the outer circumferential surface of the rib of the inner ring has a concave arc shape in vertical cross section.

8. The bearing device with a sealing device according to any one of claims 1 to 5,
wherein the rib of the inner ring has a circumferential groove formed in the outer circumferential surface of the rib,
wherein the inner ring-side member has a claw formed at an inner end portion of the inner ring-side member to face a radially inner side, and
wherein the claw is engaged with the circumferential groove.

9. The bearing device with a sealing device according to any one of claims 1 to 5, wherein the outer circumferential surface of the rib of the inner ring is knurled.

10. The bearing device with a sealing device according to any one of claims 1 to 5,
wherein the rib of the inner ring has an axial groove formed in the outer circumferential surface of the rib,
wherein the inner ring-side member has an axial projection formed on an inner circumferential surface of the inner ring-side member, and
wherein the axial projection is engaged with the axial groove.
